# EUROPEAN PATENT APPLICATION

(11) **EP 4 576 388 A1**
(43) Date of publication of application: **25.06.2025**
(21) Application number: 22959227.4
(22) Date of filing: 23.09.2022
(51) Int. Cl.: H01M 50/417, H01M 50/449, H01M 50/457

(54) **HIGH-STRENGTH LITHIUM ION BATTERY DIAPHRAGM AND PREPARATION METHOD THEREOF**

(71) Applicant: Changzhou Senior New Energy Material Co., Ltd., Changzhou, Jiangsu 213100 (CN); Shenzhen Senior Technology Material Co., Ltd., Shenzhen, Guangdong 518106 (CN)
(72) Inventor: LI, Chuang, hangzhou, Jiangsu 213100 (CN); XIAO, Wuhua, hangzhou, Jiangsu 213100 (CN); WANG, Jinbo, hangzhou, Jiangsu 213100 (CN); CUI, Yaqiang, hangzhou, Jiangsu 213100 (CN); GUO, Chen, Shenzhen, Guangdong 518106 (CN)
(74) Representative: Loyer & Abello
(86) International application number: PCT/CN2022/120967
(87) International publication number: WO 2024/060222

(57) **Abstract**

The present invention relates to the technical field of lithium ion battery diaphragms. Provided are an ultrathin lithium ion battery diaphragm with high mechanical strength and excellent thermal dimensional stability, and a preparation method thereof.

## Description

### TECHNICAL FIELD

The present disclosure relates to the technical field of lithium-ion battery separators, and particularly to a high-strength lithium-ion battery separator (i.e., high-strength lithium-ion battery diaphragm) with a thin thickness, high mechanical strength, and excellent thermal dimensional stability, and a preparation method therefor.

### BACKGROUND ART

In recent years, the popularity of new energy vehicles has rapidly increased, which results in higher demands for the energy density and safety of batteries. As one of the critical materials of the lithium-ion battery, the separator improves the energy density of the battery in a thinning method, and at the same time, it should also have sufficient mechanical strength, which avoids the short circuit caused by separator breakage during assembly and usage of the battery under external forces. Additionally, the lithium-ion battery is often accompanied by a certain degree of heating or heating generation phenomenon during the manufacturing, charging, and discharging process. If the thermal dimensional stability of the separator is poorer, the heat deformation will directly lead to a short circuit due to the positive material in contact with the negative material. Therefore, the thermal dimensional stability of the separator is a very important safety indicator. However, when the separator is thinner, it is often accompanied by a sharp decrease in mechanical strength, and the separator with higher mechanical strength usually has a poorer thermal dimensional stability.

Currently, the prior art cannot provide a separator that combines the high mechanical strength and excellent thermal dimensional stability, especially a lithium-ion battery separator with thinner thickness, higher mechanical strength, and excellent thermal dimensional stability at high temperatures.

### SUMMARY

The present disclosure solves technical problems in the prior art that the mechanical strength and thermal dimensional stability of the lithium-ion battery separator cannot be taken into account at the same time, and provides a lithium-ion battery separator with a high mechanical strength and an excellent thermal dimensional stability, and a preparation method therefor. Particularly, it provides a thin battery separator with the excellent mechanical strength and thermal stability.

Generally, the higher the mechanical strength of the polymer product is, the poorer the processability will be, and the poorer the thermal dimensional stability will be, and vice versa. In order to take into account the mechanical strength and the thermal dimensional stability of the polymer separator, the separator in the present disclosure is designed to include a core layer with a higher molecular weight and a surface layer with a lower molecular weight, wherein the core layer with the larger molecular weight has a large thermal shrinkage rate but a higher strength, and the surface layer with smaller molecular weight has a small thermal shrinkage but a lower strength, so that separator realizes a balance of low thermal shrinkage and high strength.

The present disclosure also finds that a certain correlation exists between the polymer melt index and the molecular weight of the polymer. By designing the separator to include a core layer with a lower melt index and a surface layer with a higher melt index, it can also realize that the core layer has a large thermal shrinkage rate and a higher strength, and the surface layer has a small thermal shrinkage and a lower strength, so that separator realizes the balance of low thermal shrinkage and high strength.

Based on the in-depth study of the separator formulation, the present disclosure also develops a preparation method for the separator, which can ensure a high mechanical strength of the separator without the need for a larger stretching ratio, so that it is more beneficial to the control of thermal dimensional stability and tensile uniformity. The method described mainly includes the following process steps: melting and molding a material of surface layer containing at least polyolefin and a pore-forming agent to a surface layer, and melting and molding a material of core layer containing at least the polyolefin and the pore-forming agent to a core layer, wherein the surface layer covers upper and lower surfaces of the core layer to form a stacked layer body; bi-directionally stretching the stretched stacked layer body to obtain a stretched stacked layer body; removing the pore-forming agent from the stretched stacked layer body to obtain a separator precursor; and performing heat setting on the separator precursor to obtain the separator.

Compared to the separator in the prior art, the separator of the present disclosure greatly improves the mechanical strength, especially the stretching strength, and it has an excellent thermal dimensional stability under the higher temperature. Additionally, the separator of the present disclosure has both the excellent gas permeability and puncture strength. Particularly, the high mechanical strength and excellent thermal dimensional stability can also be taken into account when the thickness is smaller.

In a specific embodiment, the present disclosure relates to a lithium-ion battery separator, including a core layer and surface layers covering upper and lower surfaces of the core layer, wherein the core layer has porousness and the surface layers have porousness, and the surface layers and the core layer satisfy at least one of the following two conditions.
1) A weight-average molecular weight of the core-layer polymer is 1.1-1.7 million, for example, which can be any one of 1.1 million, 1.15 million, 1.2 million, 1.3 million, 1.4 million, 1.45 million, 1.55 million, 1.6 million, 1.7 million or a range between any two of them, preferably 1.2-1.7 million, more preferably 1.3 million-1.6 million, and further preferably 1.4 million-1.55 million, wherein the weight-average molecular weight of the core-layer polymer is 1.01-2.20 times a weight-average molecular weight of the surface-layer polymer, for example, which can be any one of 1.01, 1.05, 1.09, 1.15, 1.30, 1.45, 1.60, 1.65, 1.75, 1.80, 2.10, 2.20 times or a range between any two of them, preferably 1.05-1.80 times, and further preferably 1.10-1.30 times.
2) A melt index of the surface-layer polymer is 1.01-2.00 times a melt index of the core-layer polymer, preferably 1.05-1.70 times, and further preferably 1.10-1.50 times, wherein the melt index is measured at 190°C, 2.16 kg/10min.

In the embodiment where the condition 1) is satisfied, the core layer and the surface layers are both porous separator layers and a specific core-layer polymer is selected. The weight-average molecular weight of the surface-layer polymer and the core-layer polymer is controlled within a certain ratio, so that the separator has excellent gas permeability, and at the same time the mechanical strength of the separator is ensured to a certain extent.

In the embodiment where the condition 2) is satisfied, the core layer and the surface layer are both porous separator layers, and the melt indexes of the surface-layer polymer and the core-layer polymer are set in a certain proportional relationship, so that the mechanical strength is ensured when the separator has the excellent gas permeability, and the product processability is good.

In a specific embodiment, the present disclosure relates to the lithium-ion battery separator, wherein in a direction from separator surfaces of two sides respectively to a center of the separator, a porous separator layer A polymer, including 2.5~10%, preferably 4.5-9%, and further preferably 6-7.5% of a separator layer thickness, has a weight-average molecular weight a or a melt index a'; and a porous separator layer B polymer, including a remaining central part, has a weight-average molecular weight b or a melt index b', which satisfies at least one of the following two conditions.
1) The weight-average molecular weight b is 1.1-1.7 million, for example, which can be any one of 1.1 million, 1.15 million, 1.2 million, 1.3 million, 1.4 million, 1.45 million, 1.55 million, 1.6 million, 1.7 million or a range between any two of them, preferably 1.2-1.7 million, more preferably 1.3 million-1.6 million, and further preferably 1.4 million-1.55 million, wherein the weight-average molecular weight b is 1.01-2.20 times the weight-average molecular weight a, preferably 1.05-1.80 times, and further preferably 1.10-1.30 times.
2) The melt index a' is 1.01-2.00 times the melt index b', for example, which can be any one of 1.01, 1.05, 1.09, 1.15, 1.30, 1.45, 1.60, 1.65, 1.75, 1.80, 2.10, 2.20 times or a range between any two of them, preferably 1.05-1.70 times, and further preferably 1.10-1.50 times, wherein the melt index is measured at 190°C, 2.16 kg/10min.

In the embodiment where the condition 1) is satisfied, both the separator layer A and separator layer B have porousness separator layers, and a porous separator layer B polymer is selected. The weight-average molecular weights of the porous separator layer A polymer and the porous separator layer B polymer are controlled to be within a certain ratio, so that the separator has the excellent gas permeability, and at the same time the mechanical strength of the separator is ensured to a certain extent.

In the embodiment where the condition 2) is satisfied, since both separator layer A and separator layer B have porousness separator layers, and the melt indexes of the porous separator layer A polymer and the porous separator layer B polymer are set in a certain proportional relationship, the mechanical strength is ensured when the separator has the excellent gas permeability, and the product processability is good.

In a preferred embodiment, the core-layer polymer or the porous separator layer B polymer is a polyolefin, preferably a single type of polyethylene, two or more types of polyethylene, or a mixture of one or more types of polyethylene and polypropylene; the surface-layer polymer or the porous separator layer A polymer is a polyolefin, preferably polyethylene, which is a single type of polyethylene, or a mixture of two or more types of polyethylene; and a weight-average molecular weight of the surface-layer polymer or the porous separator layer A polymer is 600,000-1.5 million, preferably 700,000-1.4 million, more preferably 900,000-1.4 million, and further preferably 1.1 million-1.35 million.

In a preferred embodiment, the surface layer or the porous separator layer A includes a first polyethylene with a weight-average molecular weight of 300,000-600,000, preferably 400,000-550,000, and a second polyethylene with a weight-average molecular weight of 1.3 million-3.0 million, preferably 1.3 million-1.8 million, wherein a weight ratio of the first polyethylene to the second polyethylene is 0-80: 20-100, preferably 1-50: 50-99, more preferably 0-40: 60-100, and most preferably 15-35: 65-85.

The material of core layer or the porous separator layer B material includes a third polyethylene with a weight-average molecular weight of 300,000-600,000, preferably 400,000-550,000, and a fourth polyethylene with a weight-average molecular weight of 1.3 million-3.0 million, preferably 1.5-2.0 million, wherein a weight ratio of the third polyethylene to the fourth polyethylene is 0-30: 70-100, preferably 1-10: 90-99, and more preferably 5-20: 80-95.

The core layer or the porous separator layer B optionally further includes a fifth polypropylene with a weight-average molecular weight of 300,000-600,000, preferably 400,000-550,000, wherein the fifth polypropylene accounts for 0-20% of a weight of the core layer or the porous separator layer B, preferably 0~13%.

In a preferred embodiment, a melt index of the surface-layer polymer or the porous separator layer A polymer is 0.35-0.7 g/10min, preferably 0.4-0.65 g/10min, more preferably 0.42-0.55 g/10min; and a melt index of the core-layer polymer or the porous separator layer B polymer is 0.3-0.6 g/10min, preferably 0.3-0.5 g/10min, more preferably 0.32-0.45 g/10min, wherein the melt index is measured at 190°C, 2.16 kg/10min.

In a preferred embodiment, an average pore size of the core layer or the porous separator layer B is 30-50 nm, for example, which can be any one of 30, 32, 35, 37, 40, 45, 50 nm or a range between any two of them, preferably 37-45 nm; and an average pore size of the surface layer or the porous separator layer A is 35-60 nm, for example, which can be any one of 35, 40, 45, 50, 55, 60 nm or a range between any two of them, preferably 40-50 nm. It can be understood that by controlling the average pore size of the core layer and the surface layer or the porous separator layers A and B within a certain range, it is beneficial to control a suitable gas permeability, so that the separator has a good ion permeability.

In a preferred embodiment, a thickness of the separator is 3-15 µm, preferably 10.5-11.5 µm, which further achieves the effect of thinning the separator when ensuring the gas permeability.

In a preferred embodiment, a longitudinal thermal shrinkage rate of the separator at 120°C for 1 hour is smaller than 10%, preferably smaller than 6.5%, more preferably smaller than 6.0%, and most preferably smaller than 5.6%; a longitudinal thermal shrinkage rate at 130°C for 30 minutes is smaller than 17%, preferably smaller than 15%, preferably smaller than 14%, preferably smaller than 13%, more preferably smaller than 11.5%, and most preferably smaller than 10%; a transverse thermal shrinkage rate of the separator at 120°C for 1 hour is smaller than 10%, preferably smaller than 7%, more preferably smaller than 5.0%, and most preferably smaller than 4.0%; a transverse thermal shrinkage rate at 130°C for 30 minutes is smaller than 15%, more preferably smaller than 12.5%, more preferably smaller than 8.5%, and most preferably smaller than 6.5%; preferably, a stretching strength of the separator in a longitudinal direction (length direction) is ≥2980 kgf/cm², for example, which can be any one of 2980, 3000, 3200, 3300, 3800, 4000, 4500, 5000, 6000, 6500, 7000 kgf/cm², or a range between any two of them, preferably ≥3000 kgf/ cm², and more preferably 3300-6000 kgf/cm²; and a stretching strength of the separator in a transverse direction (width direction) is ≥2980 kgf/cm², for example, which can be any one of 2980, 3000, 3200, 3300, 3800, 4000, 4500, 5000, 6000, 6500, 7000 kgf/cm², or a range between any two of them, preferably ≥ 3000 kgf/cm², and more preferably 3400-6000 kgf/cm².

In a preferred embodiment, a gas permeability of the separator is 50-250 sec/100 ml, preferably 90-140 sec/100 ml; a porosity of the separator is 35-60%, preferably 40-48%; a puncture strength of the separator is ≥ 200 gf, for example, which can be any one of 200, 400, 500, 550, 600, 650, 700, 800 gf, or a range between any two of them, preferably ≥ 400 gf, and more preferably 400-1500 gf; a sum of thicknesses of the two surface layers or a sum of thicknesses of the two porous separator layers A is 5-20% of the thickness of the separator, preferably 9-18%, and further preferably 12-15%; and a weight-average molecular weight of the separator is 1.1 million-1.6 million, preferably 1.2 million-1.5 million, and further preferably 1.3 million-1.45 million.

It is to be understood that when the thickness of the surface layer or porous separator layer A accounts for a higher percentage, the thermal shrinkage performance of the prepared separator is better, but the overall mechanical strength will be worse. The present disclosure controls the thickness percentage of the surface layer or porous separator layer A within a certain range, which is beneficial to obtain a suitable thermal shrinkage performance when pursuing the high-strength separator performance.

In a specific embodiment, the present disclosure relates to a manufacturing method for the lithium-ion battery separator, including the following steps:
1) preparing a material of surface layer and a material of core layer;
2) melting and molding the material of surface layer to be a surface layer, and melting and molding the material of core layer to be a core layer, wherein the surface layer covers upper and lower surfaces of the core layer to form a stacked layer body;
3) bi-directionally stretching the stretched stacked layer body to obtain a stretched stacked layer body;
4) removing the pore-forming agent from the stretched stacked layer body to obtain a separator precursor; and
5) performing heat setting on the separator precursor to obtain the lithium-ion battery separator.

The material of surface layer includes the first polymer and the pore-forming agent, wherein the first polyethylene includes a first polyethylene with a weight-average molecular weight of 300,000-600,000, preferably 400,000-550,000, and a second polyethylene with a weight-average molecular weight of 1.3 million-3.0 million, preferably 1.3 million-1.8 million, wherein a weight ratio of the first polyethylene to the second polyethylene is 0-80: 20-100, preferably 1-50: 50-99, more preferably 0-40: 60-100, and most preferably 15-35: 65-85.

The material of core layer includes the second polymer and the pore-forming agent, wherein the second polymer includes a third polyethylene with a weight-average molecular weight of 300,000-600,000, preferably 400,000-550,000, and a fourth polyethylene with a weight-average molecular weight of 1.3 million-3.0 million, preferably 1.5 million-2.0 million, wherein a weight ratio of the third polyethylene to the fourth polyethylene is 0-30: 70-100, preferably 1-10: 90-99, and more preferably 5-20: 80-95.

The second polymer optionally includes a fifth polypropylene with a weight-average molecular weight of 300,000-600,000, preferably 400,000-550,000, and the fifth polypropylene accounts for 0-20% of a weight of the second polymer, preferably 0~13%.

In a preferred embodiment, a weight of the material of surface layer accounts for 5-20% of a total weight of the material of surface layer and the material of core layer, preferably 9-18%, and further preferably 12-15%, wherein a weight ratio of the first polymer to the pore-forming agent in the material of surface layer is 15-30: 70-85, preferably 16-23: 77-84, and/or, a weight ratio of the second polymer to the pore-forming agent in the material of core layer is 15-30: 70-85, preferably 18-25: 75-82.

In a preferred embodiment, before bi-directionally stretching the stacked layer body, the stacked layer body is passed through a cooling bath, preferably a water bath, for double-sided cooling, and a temperature of the cooling bath is 5-40°C, preferably from 10 to 25°C, and more preferably 10-20°C. By performing the cooling bath for the double-sided cooling, the stacked layer body has a faster cooling speed; the cooling temperature of its two opposite surfaces is more uniform; and the phase separation is more complete, which is more beneficial to the consistency control of the performance of the separator.

In a preferred embodiment, the bi-directional stretching includes:
1) longitudinal stretching: longitudinally stretching the stacked layer body, wherein a stretching temperature is 80-120°C, preferably 90-115°C, and a stretching ratio is 5.0-12.0 times, preferably 6.5-8.5 times; and
2) transverse stretching: transversely stretching the stacked layer body which undergoes a longitudinal stretching, wherein a stretching temperature is 100-140°C, preferably 105-125°C, and a stretching ratio is 7.0-15.0 times, preferably 9.0-11.5 times.

In a preferred embodiment, the pore-forming agent is a small molecule solvent that is able to dissolve a polyolefin, preferably liquid paraffin with a kinematic viscosity of 35~120 cps at 40°C.

In the preferred embodiment, the melting molding is performed by using a plurality of extruders, for example, three extruders, preferably two extruders, wherein a material of core layer is put into one extruder (referred to as a first extruder), and a material of surface layer is put into the rest of extruders (referred to as a second extruder), which then passes through a co-extrusion die head to form the stacked layer body.

In a preferred embodiment, 1) parameters of the second extruder include: an extruding temperature of 150-250°C, and a screw speed of 40-90r/min;
2) parameters of the first extruder include: an extruding temperature of 150-250°C, and a screw speed of 60-100r/min; and
3) a parameter of the co-extrusion die head includes: a setting temperature of 150-250°C.

In a preferred embodiment, the pore-forming agent is removed from the stretched stacked layer body by using an extractant, wherein the extractant is an alkane extractant, preferably dichloromethane; preferably, a circulating liquid feed volume of the extractant is 1~5m³/h; and the stretched stacked layer body is heated for drying by using one or more means of a hot roller, a heat plate, and hot air, preferably with a drying temperature of 20~150 °C.

In a preferred embodiment, parameters for the heat setting include: a relaxation rate of 5-30%, and a setting temperature of 120-145°C.

### BRIEF DESCRIPTION OF DRAWINGS

The present disclosure is further described below in conjunction with the drawings.

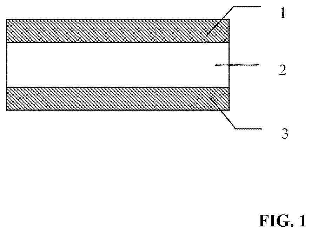

FIG. 1 shows a schematic structure diagram of a high-strength lithium-ion battery separator provided by the present disclosure.

Reference numbers in FIG. 1: 1 - upper surface layer; 2 - core layer; 3 - lower surface layer.

### DETAILED DESCRIPTION OF EMBODIMENTS

Before further describing the present disclosure, certain terms used in the specification, embodiments, and appended claims are collected in the following sections. The definitions set forth herein shall be read and understood by those skilled in the art in light of the rest of the present disclosure. Unless otherwise defined, all technical and scientific terms used herein have the same meaning as is commonly understood by one of ordinary skill in the art to which the present disclosure belongs.

The terms "one" and "another" as used herein are used for descriptive purposes only and are not to be understood as indicating or implying relative importance or implicitly specifying the number of technical features indicated.

The term "approximate" used herein when referring to a value means to include variations, such as ±10%, ±5%, ±1%, or ±0.1% of a specific value.

The term "substantially the same" used herein when referring to two values means that the difference between the two values is smaller than 10%, 5%, or 1% of the average of the two values.

The term "polyolefin" used herein can be a polyolefin monomer (i.e., a single type of polyolefin), a polyolefin copolymer, or a polyolefin mixture.

Referring to FIG. 1, the separator of the present disclosure includes a porous core layer 2 and porous surface layers covering upper and lower surfaces of the core layer, i.e., the upper surface layer 1 and the lower surface layer 3 in FIG. 1. In order to realize a balance of low thermal shrinkage and high strength for the separator, the melt indexes or weight-average molecular weights of the surface-layer polymer and the core-layer polymer can be set to a specific proportional relationship, and the core layer and the surface layer are both porous structures, which ensures the passage of ions in the electrolyte. In an optional solution, a melt index of the surface-layer polymer is set as 1.01-2.00 times a melt index of the core-layer polymer, preferably 1.05-1.70 times, and further preferably 1.10-1.50 times. In an optional solution, a weight-average molecular weight of the core-layer polymer can be 1.1 million-1.7 million, preferably 1.2 million-1.7 million, more preferably 1.3 million-1.6 million, and further preferably 1.4 million-1.55 million; and the weight-average molecular weight of the core-layer polymer can be 1.01-2.20 times the weight-average molecular weight of the surface-layer polymer, preferably 1.05-1.80 times, and further preferably 1.10-1.30 times.

It can be understood that the surface-layer polymer and the core-layer polymer described in the present disclosure can be the same or different polymers, wherein the different polymers are referred to: polymers with different chemical properties (e.g., a copolymer of PE and PP, where polymers with different chemical properties are chemically distinct from a copolymer of PE and PE); and/or polymers with the same chemical properties but with different characteristics (e.g., two PEs with different characteristics (e.g., two types of PE with different characteristics such as density, molecular weight, molecular weight distribution, rheological properties, and additives (composition and/or percentage)). The types of polymers can be the same or entirely consistent. The surface-layer polymer and core-layer polymer can be independently selected polyolefins. The polyolefin can include an ethylene homopolymer, a propylene homopolymer, a copolymer of ethylene and propylene, or a mixture of the above polymers, for example, it can be a single type of polyethylene, a mixture of two or more types of polyethylene, or a mixture of one or more types of polyethylene and polypropylene. The polyolefin can be obtained by a one-step polymerization method or a multi-step polymerization method. Further, in order to ensure processability, a melt index of the surface-layer polymer adopted by the separator of the present disclosure is 0.35-0.7 g/10min, preferably 0.4-0.65 g/10min, and more preferably 0.42-0.55 g/10min, wherein a melt index of the core-layer polymer is 0.3-0.6 g/10min, preferably 0.3-0.5 g/10min, more preferably 0.32-0.45 g/10min, and the melt index is measured at 190°C, 2.16 kg/10min.

The present disclosure controls a pore size of the separator to be 30-60 nm, an average pore size of the core layer to be 30-50 nm, preferably 37-45 nm, and an average pore size of the surface layer to be 35-60 nm, preferably 40-50 nm, so as to ensure that the separator has a good gas permeability.

The thickness of the separator of the present disclosure is larger than 3 µm, preferably larger than 5 µm. In some possible embodiments, the thickness of the separator can be 3~15 µm. It can be understood that the thickness of the separator can be any one of point values of 3 µm, 4.5 µm, 5 µm, 6 µm, 7.5 µm, 10 µm, 14.5 µm, 15 µm, or a range between any two point values, for example, preferably 10.5~11.5 µm. The sum of the thicknesses of two surface layers is 5-20% of the thickness of the separator, preferably 9-18%, and further preferably 12-15%. The thicknesses of the two surface layers can be substantially the same or different, preferably both substantially the same.

The preferred manufacturing methods of the separators of the present disclosure are discussed next. However, when the obtained separator has characteristics satisfying the present disclosure, there are no restrictions on the selection of polymers, the types of pore-forming agents, extrusion methods, stretching methods, extraction methods, heat setting methods, etc.

Specifically, the separator of the present disclosure can be preferably obtained by the following preparation method.

### 1. Raw material preparation

The material of surface layer and the material of core layer are prepared respectively. The material of surface layer includes a first polymer and a pore-forming agent, wherein the first polymer can be a polyolefin monomer or a polyolefin mixture. Preferably, the first polymer includes a first polyethylene with a weight-average molecular weight of 300,000-600,000 and a second polyethylene with a weight-average molecular weight of 1.3 million-3.0 million. For example, the weight-average molecular weight of the first polyethylene can be any one value of 300,000, 350,000, 400,000, 450,000, 500,000, 550,000, 600,000, or a range of values between any two values, such as preferably 400,000-550,000. For example, the weight-average molecular weight of the second polyethylene can be any one value of 1.3 million, 1.35 million, 1.4 million, 1.45 million, 1.5 million, 1.55 million, 1.6 million, 1.65 million, 1.7 million, 1.8 million, or a range of values between any two values, such as preferably 1.3 million-1.8 million. The weight ratio of the first polyethylene to the second polyethylene is 0-80: 20-100, preferably 1-50: 50-99, more preferably 0-40: 60-100, and most preferably 15-35: 65-85.

The material of core layer includes a second polymer and a pore-forming agent, wherein the second polymer can be a polyolefin monomer or a polyolefin mixture. Preferably, the second polymer includes a third polyethylene with a weight-average molecular weight of 300,000-600,000, preferably 400,000-550,000, and a fourth polyethylene with a weight-average molecular weight of 1.3 million-3.0 million, preferably 1.5 million-2.0 million, wherein a weight ratio of the third polyethylene to the fourth polyethylene is 0-30: 70-100, preferably 1-10: 90-99, and more preferably 5-20: 80-95. The second polymer optionally includes a fifth polypropylene with a weight-average molecular weight of 300,000-600,000, preferably 400,000-550,000, and the fifth polypropylene accounts for 0-20% of a weight of the second polymer, preferably 0~13%.

The first polyethylene and the third polyethylene can be the same or different polyethylene, and the second polyethylene and the fourth polyethylene can be the same or different polyethylene.

Any pore-forming agent conventionally used in the art can be used, e.g., the pore-forming agent is a small molecule solvent that can dissolve the polyolefin, preferably liquid paraffin with a kinematic viscosity of 35~120 cps at 40°C.

### 2. Melt extrusion

A plurality of extruders, preferably two extruders (e.g., twin-screw extruders) are used for melt extrusion, wherein the material of core layer is put into one extruder (referred to as the first extruder), and the material of surface layer is put into the rest of extruders (referred to as the second extruder), wherein the resultant is sheared into a homogeneous polymer molten body, which is then extruded by a three-layer structured die head to form a stacked layer body. Preferably, the nitrogen or other inert gases are filled into the barrels of both the second extruder and the first extruder to prevent oxidative cross-linking reactions.

Preferably, the parameters of the second extruder include: an extruding temperature of 150-250°C, and a screw speed of 40-90r/min; the parameters of the first extruder include: an extruding temperature of 150-250°C, and a screw speed of 60-100r/min; and the parameter of the co-extrusion die head includes: a setting temperature of 150-250°C.

In other possible embodiments, the melt molding step can also be carried out without using the co-extrusion die head, for example, by using a stacking combination method. The sheets extruded from different die heads are cooled and cast, stretched, extracted and dried, and heat setting respectively, and then stacked together; or the sheets extruded from different die heads are stacked together, and then undergo the subsequent processes of stretching, extraction, and heat setting, etc. The specific process parameters can be referred to as the process conditions in the different processes of the present disclosure.

In possible embodiments, the weight of the material of surface layer accounts for 5-20% of the total weight of the material of surface layer and the material of core layer, preferably 9-18%, and further preferably 12-15%, wherein a weight ratio of the first polymer to the pore-forming agent in the material of surface layer is 15-30: 70-85, preferably 16-23: 77-84, and/or, a weight ratio of the second polymer to the pore-forming agent in the material of core layer is 15-30: 70-85, preferably 18-25: 75-82.

### 3. Cooling casting

The melt extruded by the die head is adhered to a cooling roller to form a sheet, and the cooling rate of the sheet is accelerated by using a water bath device, wherein a cooling roller temperature is 10~40 °C, and a water bath temperature is 10~40 °C, preferably 10 to 25 °C, and more preferably 10-20 °C.

The casting process adopts the water bath cooling, which provides the advantage of double-sided cooling compared to the conventional cooling with one cooling roller, thereby providing a good consistence on the double-sided performance. Compared to the double-sided cooling with two cooling rollers, the heat exchange duration between the water bath cooling and the separator is longer, and the cooling is more adequate. Additionally, due to the optimized formulation and three-layer structure, it is possible to obtain a higher stretching strength at a lower stretching ratio, which prevents scratching of the separator surface caused by stretching slippage and uneven stretching caused by a high stretching ratio. In the current known patents (such as CN112592500A) about the high intensity, the longitudinal stretching ratio is about 15~20 times, and the transverse stretching ratio is about 11~20 times. In contrast, the longitudinal stretching ratio of the present disclosure is 5.0-12.0 times (preferably 6.5-8.5 times); a transverse stretching ratio is 7.0-15.0 times (preferably 9.0-11.5 times); the stretching strength of the separator is generally above 3,000 (the prior art is much lower than this value); and the heat shrinkage at 120°C is below 6% (the prior art is generally above 10%).

### 4. Separator stretching

Longitudinal stretching: the sheet obtained by casting is stretched along the machine direction (longitudinal direction), wherein the stretching temperature is 80~120°C, and stretching ratio is 5.0~12.0 times, which can be any one of 5 times, 5.5 times, 6 times, 6.5 times, 7 times, 7.5 times, 8.5 times, 10 times, 11 times, 12 times, or a range of values between any two values, for example, preferably 6.5 ~8.5 times.

Transverse stretching: the thick sheet which has been longitudinally stretched is fed into a transverse stretching machine for transverse stretching, wherein the stretching temperature is 100~140°C, and the stretching ratio is 7.0~15.0 times, which can be any one of 7 times, 7.5 times, 8.5 times, 9 times, 10 times, 10.5 times, 11.5 times, 12 times, 13 times, 15 times, or a range of values between any two values, for example, preferably 9.0~11.5 times.

### 5. Extraction and drying

The stretched separator is immersed into a tank containing an extractant, and the pore-forming agent is extracted by using the principle of similarity and compatibility. The extractant is an alkane extractant, preferably dichloromethane; preferably, a circulating liquid feed volume of the extractant is 1~5m³/h; and the stretched stacked layer body is heated for drying by using one or more means of a hot roller, a heat plate, and hot air, preferably with a drying temperature of 20~150 °C. Therefore, the residual extractant on the separator surface volatilizes and can be recovered for reuse.

### 6. Heat setting

The parameters of heat setting include: a relaxation rate of 5-30%, and a setting temperature of 120-145°C. Under the same setting temperature condition, the larger the relaxation rate is, the lower the heat shrinkage of the separator is.

The present disclosure is further illustrated below in conjunction with examples. The following examples are used only to illustrate the present disclosure and are not intended to limit the implementation scope of the present disclosure.

### Examples

### Example 1

a) The first polyethylene powder (with a weight-average molecular weight of 500,000) and the second polyethylene powder (with a weight-average molecular weight of 1.5 million) were measured and mixed in a weight ratio of 20:80, so as to obtain a polyethylene mixture. Subsequently, the polyethylene mixture and liquid paraffin were added into a second extruder in a weight ratio of 18:82, and they were melted and mixed at 200°C and 80 rpm, so as to obtain a surface-layer polymer molten body.
b) The third polyethylene powder (with a weight-average molecular weight of 500,000) and the fourth polyethylene powder (with a weight-average molecular weight of 1.5 million) were measured and mixed in a weight ratio of 5:95, so as to obtain a polyethylene mixture. Subsequently, the polyethylene mixture and liquid paraffin were added into a first extruder in a weight ratio of 18:82, and they were melted and mixed at 200°C and 90 rpm, so as to obtain a core-layer polymer molten body.
c) The polymer molten bodies in the second extruder and the first extruder were simultaneously injected into a 200°C three-layer co-extrusion die head at a weight ratio of 13.9:86.1, wherein the surface-layer polymer molten body of the second extruder was distributed on two side surfaces of the core-layer polymer molten body of the first extruder.
d) The melt (the polymer molten body) extruded from the die head was cooled by the cooling roller and the water bath, so as to obtain a stacked layer body of an ABA three-layer structure (i.e., the structure shown in FIG. 1), wherein the temperature of the cooling roller and the water bath was 25°C.
e) The stacked layer body obtained in step d was longitudinally stretched at 103°C and a ratio of 7.2 times; and subsequently, it was then transversely stretched at 117°C and a ratio of 10.5 times.
f) The membrane obtained after bi-directional stretching was immersed into an extraction tank containing dichloromethane liquid, and the liquid paraffin in the membrane was extracted out and then dried at 25~40°C.
g) The membrane obtained in step f was subjected to secondary stretching at 130°C and a ratio of 1.4, followed by the heat setting at 134°C and a relaxation rate of 18%, so as to obtain a lithium-ion battery separator finally.

### Example 2

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 5:95, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) The polymer molten bodies in the second extruder and the first extruder were simultaneously injected into the 200°C three-layer co-extrusion die head at a weight ratio of 17.4:82.6, wherein the surface-layer polymer molten body of the second extruder was distributed on two side surfaces of the core-layer polymer molten body of the first extruder.
d) Next, the lithium-ion battery separator was made according to step d)~step g) in Example 1.

### Example 3

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 5:95, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) The polymer molten bodies in the second extruder and the first extruder were simultaneously injected into the 200°C three-layer co-extrusion die head at a weight ratio of 10.4:89.6, wherein the surface-layer polymer molten body of the second extruder was distributed on two side surfaces of the core-layer polymer molten body of the first extruder.
d) Next, the lithium-ion battery separator was made according to step d)~step g) in Example 1.

### Example 4

a) The first polyethylene powder (with the weight-average molecular weight of 500,000) and the second polyethylene powder (with the weight-average molecular weight of 1.5 million) were measured and mixed in the weight ratio of 80:20, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 5:95, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Example 5

a) The first polyethylene powder (with the weight-average molecular weight of 500,000) and the second polyethylene powder (with the weight-average molecular weight of 1.5 million) were measured and mixed in the weight ratio of 40:60, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 30:70, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Example 6

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The fourth polyethylene powder (with a weight-average molecular weight of 1.5 million) and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Example 7

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 2 million) were measured and mixed in the weight ratio of 20:80, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Example 8

a) The first polyethylene powder (with the weight-average molecular weight of 500,000) and the second polyethylene powder (with the weight-average molecular weight of 2 million) were measured and mixed in the weight ratio of 30:70, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 2 million) were measured and mixed in the weight ratio of 20:80, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Example 9

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000), the fifth polypropylene powder (with the weight-average molecular weight of 500,000), and the fourth polyethylene powder (with the weight-average molecular weight of 1.5 million) were measured and mixed in a weight ratio of 5:13:82, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was made according to step c)~step g) in Example 1.

### Example 10

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 5:95, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) The polymer molten bodies in the second extruder and the first extruder were simultaneously injected into the 200°C three-layer co-extrusion die head at the weight ratio of 86.1:13.9, wherein the surface-layer polymer molten body of the second extruder was distributed on two side surfaces of the core-layer polymer molten body of the first extruder.
d) Next, the lithium-ion battery separator was prepared according to step d)~step g) in Example 1.

### Example 11

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 18:82, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was made according to step c)~step g) in Example 1.

### Example 12

a) The first polyethylene powder (with the weight-average molecular weight of 500,000) and the second polyethylene powder (with the weight-average molecular weight of 1.5 million) were measured and mixed in the weight ratio of 20:80, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 5:95, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) The polymer molten bodies in the second extruder and the first extruder were simultaneously injected into the 200°C three-layer co-extrusion die head at the weight ratio of 78.3:21.7, wherein the surface-layer polymer molten body of the second extruder was distributed on two side surfaces of the core-layer polymer molten body of the first extruder.
d) Next, the lithium-ion battery separator was prepared according to step d)~step g) in Example 1.

### Comparative Example 1

a) The first polyethylene powder (with the weight-average molecular weight of 500,000) and the second polyethylene powder (with the weight-average molecular weight of 1.5 million) were measured and mixed in the weight ratio of 70:30, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.
b) The third polyethylene powder (with the weight-average molecular weight of 500,000) and the fourth polyethylene powder (with the weight-average molecular weight of 1.5 million) were measured and mixed in the weight ratio of 50:50, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Comparative Example 2

a) The second polyethylene powder (with the weight-average molecular weight of 1.3 million) and the liquid paraffin were added into the second extruder in the weight ratio of 18:82, and they were melted and mixed at 200°C and 80 rpm, so as to obtain the surface-layer polymer molten body.
b) The fourth polyethylene powder (with a weight-average molecular weight of 1.3 million) and liquid paraffin were added into the first extruder in the weight ratio of 18:82, and they were melted and mixed at 200°C and 90 rpm, so as to obtain the core-layer polymer molten body.
c) Next, the lithium-ion battery separator was prepared according to step c)~step g) in Example 1.

### Comparative Example 3

The first polyethylene powder (with the weight-average molecular weight of 500,000) and the second polyethylene powder (with the weight-average molecular weight of 1.5 million) were measured and mixed in the weight ratio of 70:30, so as to obtain the polyethylene mixture. Subsequently, the polyethylene mixture and liquid paraffin were added into the second extruder in the weight ratio of 18:82, and they were melted and mixed at 200°C and 80 rpm, so as to obtain the surface-layer polymer molten body.

b) The third polyethylene powder (with the weight-average molecular weight of 500,000), the fifth polypropylene powder (with the weight-average molecular weight of 500,000), and the fourth polyethylene powder (with the weight-average molecular weight of 1.5 million) were measured and mixed in the weight ratio of 30:20:50, so as to obtain the polyethylene mixture. Subsequently, the polyethylene mixture and liquid paraffin were added into the first extruder in the weight ratio of 18:82, and they were melted and mixed at 200°C and 90 rpm, so as to obtain the core-layer polymer molten body.

c) Next, the lithium-ion battery separator was made according to step c)~step g) in Example 1.

It is to be understood that the technical effects described by the present disclosure can be realized when the weight-average molecular weight or the melt index of the separator layer of the separator conforms to the gradient law defined by the present disclosure, and it is not limited to a proportional relationship of the thicknesses of the core layer and the surface layer. When there is an obvious interlayer interface in the thickness direction of the separator, the separator layer on the interface in the direction close to the center of the separator is the core layer, and the separator layers from two side surfaces of the separator to the interface are surface layers of two sides respectively. When the interlayer interface is not obvious, in the preferred embodiment, in the thickness of the separator, in the direction from separator surfaces of two sides to the center of the separator, the part including 2.5~10%, preferably 4.5-9%, and further preferably 6-7.5% of the separator layer thickness, is the surface layer (single side) of the present disclosure, and the remaining center part is the core layer.

The present disclosure used the following test methods for measurement.

### Thicknesses

It was measured by using a German Mahr C1208 thickness gauge and based on *GB*/*T6672-2001.*

### Gas permeability

It was measured by using a Japanese AsahiEG01-55-1MR gas permeability tester based on *GB*/*T 36363-2018.*

### Porosity

It was measured by using the gravimetric method based on *GB*/*T 36363-2018.*

### Puncture strength

It was measured by using the Chinese puncture testing machine EM6.102 based on *GB*/*T 36363-2018.*

### Stretching strength

It was measured by using the Chinese stretching testing machine EM6.202 based on *GB*/*T 1040[1].3-2006.*

### Thermal shrinkage rate

The distance L₀ between two points on the separator was marked and measurement at the room temperature (23°C); then they were put between two sheets of A4 paper, put together into the oven at 120°C, kept warm for 1 hour, and taken out to cool down naturally to the room temperature (or they were put together into the oven at 130°C, kept warm for 0.5 hour, and taken out to cool down naturally to the room temperature); and the distance L₁ between the two points was measured. The shrinkage rate= (L₀-L₁)/L₀*100%.

### Melt index

It was measured by using the MTS ZRZ1452 melt flow rate tester based on *GB*/*T 3682.2-2018.*

The measurement data of compositions and properties of Examples 1-12 and Comparative Examples 1-3 is shown in Table 1.

**Table 1**

| Items | Powder Molecular Weight (W) | | | | | Weight Ratio of Surface-Laver Powder (%) | | Weight Ratio of Core Layer Powder (%) | | |
|---|---|---|---|---|---|---|---|---|---|---|
| | First Polyethylene | Second Polyethylene | Third Polyethylene | Fourth Polyethylene | Fifth Polypropylene | First Polyethylene | Second Polyethylene | Third Polyethylene | Fourth Polyethylene | Fifth Polypropylene |
| Example 1 | 50 | 150 | 50 | 150 | \ | 20 | 80 | 5 | 95 | \ |
| Example 2 | 50 | 150 | 50 | 150 | \ | 20 | 80 | 5 | 95 | \ |
| Example 3 | 50 | 150 | 50 | 150 | \ | 20 | 80 | 5 | 95 | \ |
| Example 4 | 50 | 150 | 50 | 150 | \ | 80 | 20 | 5 | 95 | \ |
| Example 5 | 50 | 150 | 50 | 150 | \ | 40 | 60 | 30 | 70 | \ |
| Example 6 | 50 | 150 | 50 | 150 | \ | 20 | 80 | \ | 100 | \ |
| Example 7 | 50 | 150 | 50 | 200 | \ | 20 | 80 | 20 | 80 | \ |
| Example 8 | 50 | 200 | 50 | 200 | \ | 30 | 70 | 20 | 80 | \ |
| Example 9 | 50 | 150 | 50 | 150 | 50 | 20 | 80 | 5 | 90 | 5 |
| Example 10 | 50 | 150 | 50 | 150 | \ | 20 | 80 | 5 | 95 | \ |
| Example 11 | 50 | 150 | 50 | 150 | \ | 20 | 80 | 18 | 82 | \ |
| Example 12 | 50 | 150 | 50 | 150 | \ | 20 | 80 | 5 | 95 | \ |
| Comparative Example 1 | 50 | 150 | 50 | 150 | \ | 70 | 30 | 50 | 50 | \ |
| Comparative Example 2 | \ | 130 | \ | 130 | \ | \ | 100 | \ | 100 | \ |
| Comparative Example 3 | 50 | 150 | 50 | 150 | 50 | 70 | 30 | 30 | 50 | 20 |
| Example 1 | 130 | 145 | 0.42 | 0.33 | 1.27 | 1.6 | 9.9 | 11.5 | 119 | 46.5 |
| Example 2 | 130 | 145 | 0.42 | 0.33 | 1.27 | 2.0 | 9.5 | 11.5 | 115 | 47.5 |
| Example 3 | 130 | 145 | 0.42 | 0.33 | 1.27 | 1.2 | 10.3 | 11.5 | 127 | 45.0 |
| Example 4 | 70 | 145 | 0.65 | 0.33 | 1.97 | 1.6 | 9.9 | 11.5 | 110 | 47.2 |
| Example 5 | 110 | 120 | 0.54 | 0.48 | 1.13 | 1.6 | 9.9 | 11.5 | 105 | 47.2 |
| Example 6 | 130 | 150 | 0.42 | 0.3 | 1.40 | 1.6 | 9.9 | 11.5 | 120 | 46.2 |
| Example 7 | 130 | 170 | 0.42 | 0.3 | 1.40 | 1.6 | 9.9 | 11.5 | 135 | 45.2 |
| Example 8 | 155 | 170 | 0.375 | 0.3 | 1.25 | 1.6 | 9.9 | 11.5 | 139 | 44.8 |
| Example 9 | 130 | 140 | 0.42 | 0.33 | 1.27 | 1.6 | 9.9 | 11.5 | 117 | 47.0 |
| Example 10 | 130 | 145 | 0.42 | 0.33 | 1.27 | 9.9 | 1.6 | 11.5 | 112 | 47.9 |
| Example 11 | 130 | 132 | 0.42 | 0.41 | 1.02 | 1.6 | 9.9 | 11.5 | 117 | 46.1 |
| Example 12 | 130 | 145 | 0.42 | 0.33 | 1.27 | 2.5 | 9.0 | 11.5 | 114 | 47.1 |
| Comparative Example 1 | 80 | 100 | 0.72 | 0.6 | 1.20 | 1.6 | 9.9 | 11.5 | 93 | 48.3 |
| Comparative Example 2 | 130 | 130 | 0.42 | 0.42 | 1.00 | 1.6 | 9.9 | 11.5 | 115 | 46 |
| Comparative Example 3 | 80 | 100 | 0.72 | 0.47 | 1.53 | 1.6 | 9.9 | 11.5 | 96 | 48.7 |

**(Table 1 continued)**

| Items | Puncture Strength (gf) | Stretching Strength (kgf/cm²) | | Thermal Shrinkage (120°C, 1 hour) | | Thermal Shrinkage (130°C, 0.5 hour) | |
|---|---|---|---|---|---|---|---|
| | | Longitudinal | Transverse | Longitudinal | Transverse | Longitudinal | Transverse |
| Example 1 | 620 | 3253 | 3370 | 6.1 | 3.0 | 10.8 | 7.5 |
| Example 2 | 610 | 3010 | 3122 | 5.5 | 2.5 | 9.7 | 6.1 |
| Example 3 | 643 | 3385 | 3490 | 8.1 | 4.9 | 12.0 | 8.3 |
| Example 4 | 581 | 2985 | 3052 | 5.2 | 2.2 | 8.7 | 5.5 |
| Example 5 | 592 | 3007 | 3090 | 5.0 | 2.1 | 8.5 | 5.8 |
| Example 6 | 635 | 3288 | 3405 | 6.3 | 3.2 | 11.1 | 7.8 |
| Example 7 | 702 | 3585 | 3694 | 9.1 | 6.6 | 13.7 | 12.1 |
| Example 8 | 714 | 3602 | 3691 | 9.9 | 7.1 | 16.3 | 12.8 |
| Example 9 | 614 | 3160 | 3240 | 5.8 | 2.7 | 10.2 | 6.4 |
| Example 10 | 568 | 2829 | 2910 | 5.0 | 2.2 | 8.6 | 5.7 |
| Example 11 | 605 | 3053 | 3110 | 5.7 | 2.4 | 8.7 | 5.9 |
| Example 12 | 601 | 2985 | 2993 | 5.4 | 2.3 | 9.3 | 5.8 |
| Comparative Example 1 | 495 | 2384 | 2280 | 5.5 | 1.7 | 9.0 | 5.1 |
| Comparative Example 2 | 590 | 2850 | 2945 | 5.4 | 2.3 | 8.4 | 5.7 |
| Comparative Example 3 | 482 | 2237 | 2186 | 5.2 | 1.9 | 8.5 | 5.3 |

Compared with the prior art, through in-depth research on the ratio of the surface layer to the core layer and the development of corresponding preparation processes, the present disclosure produces the lithium-ion battery separator lithium-ion battery separator with features of thinness, high mechanical strength (especially the stretching strength), and good thermal dimensional stability, which is especially suitable for the power lithium-ion battery field with high energy density and high safety requirements. Meanwhile, the separator of the present disclosure has the excellent gas permeability and puncture strength. Additionally, the preparation process disclosed in the present disclosure is simple and more suitable for the high-speed and continuous production, which is beneficial for reduction of the cost of the separator.

Additionally, the separator surfaces in Examples 1 to 12 are normal and free from crystalline spots when ensuring the better overall performance. The separator surfaces in Examples 1 and 2 are normal, but the separator surface in Example 3 has slight crystalline spots and there are also problems in processability. The Examples 13, 14, 15, Comparative Example 4, and Comparative Example 5 use the same raw material formulation as Example 1, wherein the only difference is the cooling method or stretching ratio. The Measurement data of properties is shown in Table 2.

**Table 2**

| | | Example 13 | Example 14 | Example 15 | Comparative Example 4 | Comparative Example 5 |
|---|---|---|---|---|---|---|
| Cooling Method | | Cold Water bath; 20 °C | Cold Water bath; 20 °C | Cold Water bath; 20 °C | Cooling Roller; 20°C | Cold Water bath; 20 °C |
| Stretching Ratio | Longitudinal Stretching Ratio | 5.2 | 11 | 7.2 | 7.2 | 13 |
| | Transverse Stretching Ratio | 7.5 | 13.5 | 10.3 | 10.3 | 15.5 |
| Separator Surface Appearance | | Qualified | Qualified | Qualified | Some crystalline spots on Separator Surface | Scratched Separator Surface and Frequent Separator Breakage |
| Stretching Strength (kgf/cm² ) | MD | 2750 | 3706 | 3320 | 3300 | 3768 |
| | TD | 2795 | 3625 | 3295 | 3280 | 3735 |
| Thermal Shrinkage 120 °C,1 hour | MD | 4.8 | 8.3 | 5.9 | 6 | 9.1 |
| | TD | 0.9 | 4.2 | 2.7 | 2.8 | 5.7 |

The present disclosure notes that when the cooling cast effect is poor, it will result in uneven cooling and the separator surface exhibits crystalline spots, and the performance consistency is poor. The solution of the present disclosure adopts the cooling bath, which helps the separator to cool rapidly, so that the phase separation in the wet separator process is more complete, and the preferred cooling duration is 10s or more.

The present disclosure also notes that when the stretching ratio is too low, the molecular chain orientation is low, which results in the low strength of the product; and when the stretching ratio is too high, the stretching stress is high and the heat shrinkage is poor, which may even lead to the separator to be broken directly.

The melt index of the polymer is related to the molecular weight of the polymer. When the ratio of the melt indexes of the surface layer to the core layer is more than 2 times, which means that the molecular weight of the surface layer is relatively low, and the mechanical strength of the separator is relatively low; and when the ratio is equal to or smaller than 1 time, the effect of improving the heat shrinkage cannot be achieved. By selecting an appropriate melt index ratio or a weight-average molecular weight ratio, the present disclosure obtains the thinner separator with the excellent strength and improved thermal shrinkage.

The present disclosure also notes that when the temperature of the extrusion system is too high, the cross-linking reaction between the raw materials will occur and the black spot will be produced; and when the temperature of the extrusion system is low, the raw materials will not melt or the melting condition is worse, which affects the production. When the extruder speed is too low, the raw material conveying efficiency is low and the pressure is unstable; and when the extruder speed is too high, the shear force is too strong, molecular chain breaks, and the shear heat will also lead to localized cross-linking reactions in the polymer. When the extraction feed volume exceeds 5m³/h, it is easy to cause waste; and when it is lower than 1m³/h, the extraction is incomplete, which affects the overall performance of the separator.

Preferably, the present disclosure obtains a separator with the excellent comprehensive performance by appropriately selecting various parameters.

Unless the context clearly indicates otherwise, the singular forms "a", "an", and "the" include the plural forms in this specification and in the appended claims. Unless otherwise defined, all technical and scientific terms used herein have the same meaning as is commonly understood by one of ordinary skill in the art. The methods described herein can be performed in any order logically possible besides the particular order disclosed.

The representative embodiments are intended to help illustrate the present disclosure and are not intended to and should not be construed as limiting the scope of the present disclosure. In fact, in addition to those shown and described herein, various modifications of the present disclosure and many other embodiments will become apparent to those skilled in the art, including the examples and the scientific and patent literature references cited herein. The embodiments contain important additional information, illustrations, and guidance that can be practically used by the present disclosure in its many embodiments and equivalents.

## Claims

1. A lithium-ion battery separator, comprising a core layer and surface layers covering upper and lower surfaces of the core layer, wherein the core layer has porousness and the surface layers have porousness, and the core layer and the surface layers satisfy at least one of following two conditions:
1) a weight-average molecular weight of the core-layer polymer being 1.1 million-1.7 million, preferably 1.2 million-1.7 million, more preferably 1.3 million-1.6 million, and further preferably 1.4 million-1.55 million, wherein the weight-average molecular weight of the core-layer polymer is 1.01-2.20 times a weight-average molecular weight of the surface-layer polymer, preferably 1.05-1.80 times, and further preferably 1.10-1.30 times; and
2) a melt index of the surface-layer polymer being 1.01-2.00 times a melt index of the core-layer polymer, preferably 1.05-1.70 times, and further preferably 1.10-1.50 times, wherein the melt index is measured at 190°C, 2.16 kg/10min.

2. A lithium-ion battery separator, wherein in a direction from separator surfaces of two sides respectively to a center of the separator, a porous separator layer A polymer, comprising 2.5~10%, preferably 4.5-9%, and further preferably 6-7.5% of a separator layer thickness, has a weight-average molecular weight a or a melt index a'; and a porous separator layer B polymer, comprising a remaining central part, has a weight-average molecular weight b or a melt index b', which satisfies at least one of following two conditions:
1) the weight-average molecular weight b being 1.1-1.7 million, preferably 1.2-1.7 million, more preferably 1.3 million-1.6 million, and further preferably 1.4 million-1.55 million, wherein the weight-average molecular weight b is 1.01-2.20 times the weight-average molecular weight a, preferably 1.05-1.80 times, and further preferably 1.10-1.30 times; and
2) the melt index a' being 1.01-2.00 times the melt index b', preferably 1.05-1.70 times, and further preferably 1.10-1.50 times, wherein the melt index is measured at 190°C, 2.16 kg/10min.

3. The lithium-ion battery separator according to claim 1 or 2, wherein the core-layer polymer or the porous separator layer B polymer is a polyolefin, preferably a single type of polyethylene, two or more types of polyethylene, or a mixture of one or more types of polyethylene and polypropylene; the surface-layer polymer or the porous separator layer A polymer is a polyolefin, preferably polyethylene, which is a single type of polyethylene, or a mixture of two or more types of polyethylene; and the weight-average molecular weight of the surface-layer polymer or the porous separator layer A polymer is 600,000-1.5 million, preferably 700,000-1.4 million, more preferably 900,000-1.4 million, and further preferably 1.1 million-1.35 million.

4. The lithium-ion battery separator according to claim 3, wherein the surface layer or the porous separator layer A comprises a first polyethylene with a weight-average molecular weight of 300,000-600,000, preferably 400,000-550,000, and a second polyethylene with a weight-average molecular weight of 1.3 million-3.0 million, preferably 1.3 million-1.8 million, wherein a weight ratio of the first polyethylene to the second polyethylene is 0-80: 20-100, preferably 1-50: 50-99, more preferably 0-40: 60-100, and most preferably 15-35: 65-85;
a material of core layer or the porous separator layer B material comprises a third polyethylene with a weight-average molecular weight of 300,000-600,000, preferably 400,000-550,000, and a fourth polyethylene with a weight-average molecular weight of 1.3 million-3.0 million, preferably 1.5-2.0 million, wherein a weight ratio of the third polyethylene to the fourth polyethylene is 0-30: 70-100, preferably 1-10: 90-99, and more preferably 5-20: 80-95; and
the core layer or the porous separator layer B further comprises a fifth polypropylene with a weight-average molecular weight of 300,000-600,000, preferably 400,000-550,000, wherein the fifth polypropylene accounts for 0-20% of a weight of the core layer or the porous separator layer B, preferably 0~13%.

5. The lithium-ion battery separator according to any one of claims 1 to 4, wherein the melt index of the surface-layer polymer or the porous separator layer A polymer is 0.35-0.7 g/10min, preferably 0.4-0.65 g/10min, more preferably 0.42-0.55 g/10min; and the melt index of the core-layer polymer or the porous separator layer B polymer is 0.3-0.6 g/10min, preferably 0.3-0.5 g/10min, more preferably 0.32-0.45 g/10min, wherein the melt index is measured at 190°C, 2.16 kg/10min.

6. **The lithium-ion** battery separator according to any one of claims 1 to 5, wherein an average pore size of the core layer or the porous separator layer B is 30-50 nm, preferably 37-45 nm; and an average pore size of the surface layer or the porous separator layer A is 35-60 nm, preferably 40-50 nm.

7. The lithium-ion battery separator according to any one of claims 1 to 6, wherein a thickness of the separator is 3-15 µm, preferably 10.5-11.5 µm.

8. The lithium-ion battery separator according to any one of claims 1 to 7, wherein a longitudinal thermal shrinkage rate of the separator at 120°C for 1 hour is smaller than 10%, preferably smaller than 6.5%, more preferably smaller than 6.0%, and most preferably smaller than 5.6%; a longitudinal thermal shrinkage rate at 130°C for 30 minutes is smaller than 17%, preferably smaller than 15%, preferably smaller than 14%, preferably smaller than 13%, more preferably smaller than 11.5%, and most preferably smaller than 10%; a transverse thermal shrinkage rate of the separator at 120°C for 1 hour is smaller than 10%, preferably smaller than 7%, more preferably smaller than 5.0%, and most preferably smaller than 4.0%; and a transverse thermal shrinkage rate at 130°C for 30 minutes is smaller than 15%, more preferably smaller than 12.5%, more preferably smaller than 8.5%, and most preferably smaller than 6.5%;
preferably, a stretching strength of the separator in a longitudinal direction (length direction) is ≥2980 kgf/cm², preferably ≥3000 kgf/ cm², and more preferably 3300-6000 kgf/cm²; and a stretching strength of the separator in a transverse direction (width direction) is ≥2980 kgf/cm², preferably ≥ 3000 kgf/cm², and more preferably 3400-6000 kgf/cm².

9. The lithium-ion battery separator according to any one of claims 1 to 8, wherein a gas permeability of the separator is 50-250 sec/100 ml, preferably 90-140 sec/100 ml; a porosity of the separator is 35-60%, preferably 40-48%; a puncture strength of the separator is ≥ 200 gf, preferably ≥ 400 gf, and more preferably 400-1500 gf; a sum of thicknesses of the two surface layers or a sum of thicknesses of the two porous separator layers A is 5-20% of the thickness of the separator, preferably 9-18%, and further preferably 12-15%; and a weight-average molecular weight of the separator is 1.1 million-1.6 million, preferably 1.2 million-1.5 million, and further preferably 1.3 million-1.45 million.

10. A manufacturing method for a lithium-ion battery separator, comprising following steps:
1) preparing a material of surface layer and a material of core layer;
2) melting and molding the material of surface layer to be a surface layer, and melting and molding the material of core layer to be a core layer, wherein the surface layer covers upper and lower surfaces of the core layer to form a stacked layer body;
3) bi-directionally stretching the stretched stacked layer body to obtain a stretched stacked layer body;
4) removing a pore-forming agent from the stretched stacked layer body to obtain a separator precursor; and
5) performing heat setting on the separator precursor to obtain the lithium-ion battery separator, wherein
the material of surface layer comprises a first polymer and the pore-forming agent, wherein the first polyethylene comprises a first polyethylene with a weight-average molecular weight of 300,000-600,000, preferably 400,000-550,000, and a second polyethylene with a weight-average molecular weight of 1.3 million-3.0 million, preferably 1.3 million-1.8 million; and a weight ratio of the first polyethylene to the second polyethylene is 0-80: 20-100, preferably 1-50: 50-99, more preferably 0-40: 60-100, and most preferably 15-35: 65-85;
the material of core layer comprises a second polymer and the pore-forming agent, wherein the second polymer comprises a third polyethylene with a weight-average molecular weight of 300,000-600,000, preferably 400,000-550,000, and a fourth polyethylene with a weight-average molecular weight of 1.3 million-3.0 million, preferably 1.5 million-2.0 million, wherein a weight ratio of the third polyethylene to the fourth polyethylene is 0-30: 70-100, preferably 1-10: 90-99, and more preferably 5-20: 80-95; and
the second polymer optionally comprises a fifth polypropylene with a weight-average molecular weight of 300,000-600,000, preferably 400,000-550,000, and the fifth polypropylene accounts for 0-20% of a weight of the second polymer, preferably 0~13%.

11. The manufacturing method according to claim 10, wherein a weight of the material of surface layer accounts for 5-20% of a total weight of the material of surface layer and the material of core layer, preferably 9-18%, and further preferably 12-15%, wherein a weight ratio of the first polymer to the pore-forming agent in the material of surface layer is 15-30: 70-85, preferably 16-23: 77-84, and/or, a weight ratio of the second polymer to the pore-forming agent in the material of core layer is 15-30: 70-85, preferably 18-25: 75-82.

12. The manufacturing method according to claim 10, wherein before bi-directionally stretching the stacked layer body, the stacked layer body is passed through a cooling bath, preferably a water bath, for double-sided cooling, and a temperature of the cooling bath is 5-40°C, preferably from 10 to 25°C, and more preferably 10 to 20°C.

13. The manufacturing method according to claim 10, wherein the bi-directional stretching comprises:
1) longitudinal stretching: longitudinally stretching the stacked layer body, wherein a stretching temperature is 80-120°C, preferably 90-115°C, and a stretching ratio is 5.0-12.0 times, preferably 6.5-8.5 times; and
2) transverse stretching: transversely stretching the stacked layer body which undergoes the longitudinal stretching, wherein a stretching temperature is 100-140°C, preferably 105-125°C, and a stretching ratio is 7.0-15.0 times, preferably 9.0-11.5 times.

14. The manufacturing method according to claim 11, wherein the pore-forming agent is a small molecule solvent that is able to dissolve the polyolefin, preferably liquid paraffin with a kinematic viscosity of 35~120 cps at 40°C.

15. The manufacturing method according to any one of claims 10 to 14, wherein the melting molding is performed by using a plurality of extruders, preferably two extruders, wherein a material of core layer is put into one extruder (referred to as a first extruder), and a material of surface layer is put into the rest of extruders (referred to as a second extruder), which then passes through a co-extrusion die head to form the stacked layer body.

16. The manufacturing method according to claim 15, wherein
1) parameters of the second extruder comprise: an extruding temperature of 150-250°C, and a screw speed of 40-90r/min;
2) parameters of the first extruder comprise: an extruding temperature of 150-250°C, and a screw speed of 60-100r/min; and
3) a parameter of the co-extrusion die head comprises: a setting temperature of 150-250°C.

17. The manufacturing method according to any one of claims 10 to 16, wherein the pore-forming agent is removed from the stretched stacked layer body by using an extractant, wherein the extractant is an alkane extractant, preferably dichloromethane; preferably a circulating liquid feed volume of the extractant is 1~5m³/h; and the stretched stacked layer body is heated for drying by using one or more means of a hot roller, a heat plate, and hot air, preferably with a drying temperature of 20~150 °C.

18. The manufacturing method according to any one of claims 10 to 17, wherein parameters of the heat setting comprise: a relaxation rate of 5-30%, and a setting temperature of 120-145°C.
